# EUROPEAN PATENT APPLICATION

(11) **EP 1 635 571 A2**
(43) Date of publication of application: **15.03.2006**
(21) Application number: 05106727.0
(22) Date of filing: 21.07.2005
(51) Int. Cl.: H04N 7/16

(54) **Wireless television system**

(30) Priority: 16.08.2004 KR 2004064264
(71) Applicant: Samsung Electronics Co, Ltd, Suwon-si, Gyeonggi-do (KR)
(72) Inventor: Park, Hong-sik, Suwon-si, Gyeonggi-do, (KR); Kim, Young-sang, Suwon-si, Gyeonggi-do (KR); Kim, Kun-tae, 816-904, Byeokjeokgol, Suwon-si, Gyeonggi-do (KR); Lee, Bong-geun, Suwon-si, Gyeonggi-do (KR)
(74) Representative: Derry, Paul Stefan

(57) **Abstract**

The wireless communication system includes a transmission device and a reception device. The transmission device includes a wireless communication part connected to the reception device by wireless, a storage part for storing a first information set when the wireless connection is off and a second information set when the wireless connection is on, a receiver for receiving a control signal requesting a certain function output from a user interface, when the wireless connection is off, and a controller for performing a function corresponding to the received control signal if the control signal is received from the user interface when the wireless connection is off, and for controlling the storage part to store the first information that is set according to the performed function. When the wireless connection is turned off, the transmission device performs functions as a set-top box, and the auto program function is executed more rapidly.

## Description

The present invention relates to a method of operating a transmission device connectable wirelessly to a reception device. The invention also provides a transmission device connectable wirelessly to a reception device.

A wireless communication system may involve the sending and receiving of digital content, such as audio and/or video, over a wireless channel A set-top box may wirelessly transmit digital content to a receiver, which may include a signalprocessing device which processes the received digital content for display.

In such a conventional wireless communication system, the transmission and reception devices can provide additional functions by operating with each other. For instance, when performing an auto program function such as an automatic channel search, the transmission device repeats a process of sending the number and additional information of a tuned channel to the reception device whenever a channel is tuned to. Thus, the greater the number of channels that are automatically tuned, the more time is required for performing the auto program function.

In the conventional wireless communication system, if the transmission device is not wirelessly connected with the reception device, the transmission device cannot operate as a stand-alone device. That is, when the wireless connection between the transmission device and the reception device is disconnected, the transmission device cannot serve as a set-top box, and this causes a loss of functionality.

The method of the invention is characterised by:
when a wireless connection between the transmission device (100) and the reception device is disconnected, at the transmission device:
   receiving a user-instigated control signal requesting a function;
   performing a function corresponding to the received control signal, the step of performing the function resulting in a first set of information being obtained;
storing the first set of information separately from information obtained in circumstances other than a function being performed at the transmission device when the wireless connection is disconnected.

The transmission device of the invention is characterised by being operable when a wireless connection between the transmission device and the reception device is disconnected:
to receive a user-instigated control signal requesting a function;
to perform a function corresponding to the received control signal, resulting in a first set of information being obtained; and
to store the first set of information separately from information obtained in circumstances other than a function being performed at the transmission device when the wireless connection is disconnected.

In the embodiments, updating of channel information relating to a channel viewed on a television connected by a wired connection to the transmission device (e.g. a set-top box) when there is no connection between the set-top box and a wireless television can be carried out when the connection to the wireless television is resumed. Also, it can allow updating of television channel information viewed on a wireless television to the set-top box, for use thereby with a wired television.

In the embodiments, a transmission device is enabled to perform functions peculiar to a set-top box by storing information which is set when a wireless link is disconnected in a separate storage space.

Embodiments of the invention will now be described with reference to the accompanying drawing figures, of which:
Figure 1 is a view of a wireless communication system using a wireless channel including a device according to the present invention;
Figure 2 is a block diagram of a transmission device and a reception device of Figure 1;
Figure 3 is an view of a mode selection screen displayed on a display device or the reception device of Figure 1;
Figure 4 is an example of a first storage part of Figure 2;
Figure 5 is an example of a second storage part of Figure 2; and
Figure 6 is a flowchart of a method in accordance with the invention.

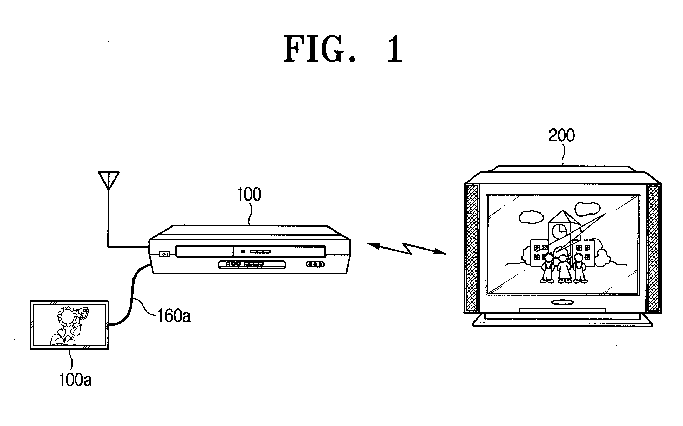

In the drawings, like reference numerals refer to the like elements throughout. Referring to Figure 1, a wireless communication system includes a display device 100a, a transmission device 100, and a reception device 200. The transmission device 100 is a set-top box which sends to the reception device 200 digital content supplied from a video source. The reception device 200 is a digital TV which reproduces and processes digital content received from the transmission device 100.

The transmission device 100 wirelessly sends the digital contents to the reception device 200. The digital contents include an audio and video (A/V) signal and additional information about the A/V signal. This may be from any of a variety of video sources, such as a digital versatile disc player (DVDP) or a broadcast station.

The transmission device 100 operates in two modes depending on a wireless connection state. In particular, if the wireless connection is off, the transmission device 100 operates in a stand-alone mode for performing functions particular to the set-top box. If the wireless connection is on, the transmission device 100 operates in a wireless mode for performing wireless communication with the reception device 200. In the stand-alone mode, the transmission device 100 performs the functions of the set-top box and thus is capable of outputting an A/V signal displayable on the display device 100a connected by a cable 160a. The stand-alone mode is referred to as a first mode, and the wireless mode is referred to as a second mode.

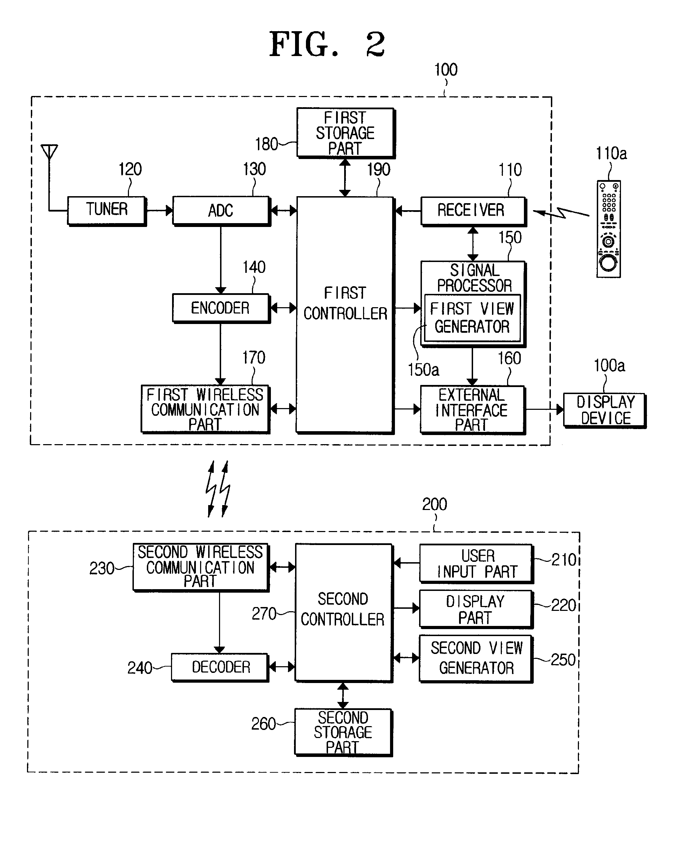

Referring to Figures 1 and 2, the transmission device 100 includes a receiver 110, a tuner 120, an analog-to-digital converter (ADC) 130, an encoder 140, a signal processor 150, an external interface part, 160, a first wireless communication part 170, a first storage part 180, and a first controller 190.

The receiver 110 receives a user request signal from a remote controller 110a that is a user interface, and outputs the received signal to the first controller 190. The receiver 110 receives the user request signal from the remote controller 110a in the stand-alone mode.

The remote controller 110a is provided with a plurality of operation keys such as number keys, direction keys, and an OK key. The remote controller 110a communicates to the receiver 110 by infrared.

The remote controller 110a outputs a display request signal requesting the display of a mode selection view, through which one of the stand-alone mode and the wireless mode can be selected through the operation keys.

The tuner 120 tunes to a channel selected by the user among a plurality of broadcast signals incoming via an antenna (not shown). The ADC 130 converts the broadcast signal of the tuned channel and additional information of the broadcast signal into a digital signal. The encoder 140 generates a transport stream (TS) by encoding the converted digital signal. The encoder 140 generates the TS by encoding the converted digital signal in a compression format such as MPEG. Hereinafter, the TS is referred to as digital content.

When the operation mode of the transmission device 100 is set to the stand-alone mode and the display of a certain channel is requested, the signal processor 150 processes the digital content generated in the encoder 140 into a displayable signal, and outputs the displayable signal to the external interface part 160. For example, the signal processor 150 decodes the digital content and outputs the encoded signal to the external interface part 160. The decoding algorithm used by the signal processor 150 corresponds to the encoding algorithm used by the encoder 140.

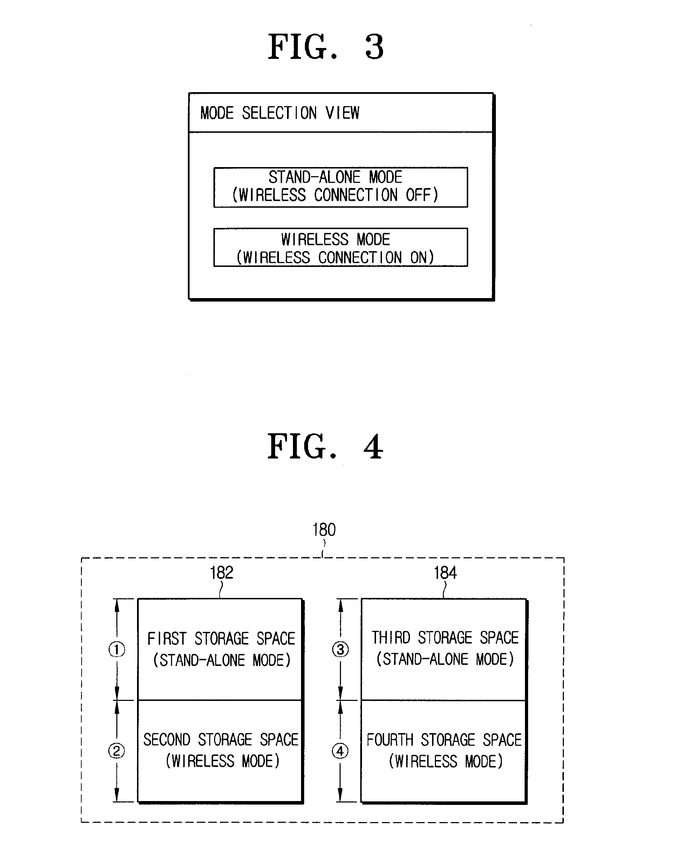

The signal processor 150 includes a first view generator 150a which generates the mode selection view. When the receiver 110 receives the display request signal from the remote controller 110a, the first view generator 150a generates and outputs the mode selection view to the external interface part 160. Thus, the mode selection view is displayed on the display device 100a as shown in Figure 3. The mode selection view can be implemented as any suitable on-screen display (OSD) or graphic user interface (GUI).

The external interface part 160 outputs the displayable signal received from the signal processor 150 to the display device 100a. The external interface part 160 is connected with the display device 100a by wire such as a cable. The display device 100a displays the displayable signal received via the signal processor 150 and the external interface part 160.

The first wireless communication part 170, in the wireless mode, transmits the digital content input from the encoder 140 to the reception device 200 over the wireless channel. The first wireless communication part 170 transmits first information and second information, which are stored in the first storage part 180 to be explained below, to the reception device 200 over the wireless channel. The first wireless communication part 170 conforms to a wireless network standard such as IEEE 802.11a (wi-fi).

The first storage part 180 stores the first information set when the transmission device 100 is in the stand-alone mode, and the second information set when the transmission device 100 is in the wireless mode.

The first information contains identification (ID) information of at least one channel tuned according to the request from the remote controller 110a in the stand-alone mode, and additional information of the tuned channel. The second information contains ID information of at least one channel tuned according to the request from the reception device 200 in the wireless mode, and additional information of the tuned channel. The ID information of the channel indicates a channel number, and the additional information of the channel indicates system information such as EPG (electronic program guide) information, subtitle information, and caption information.

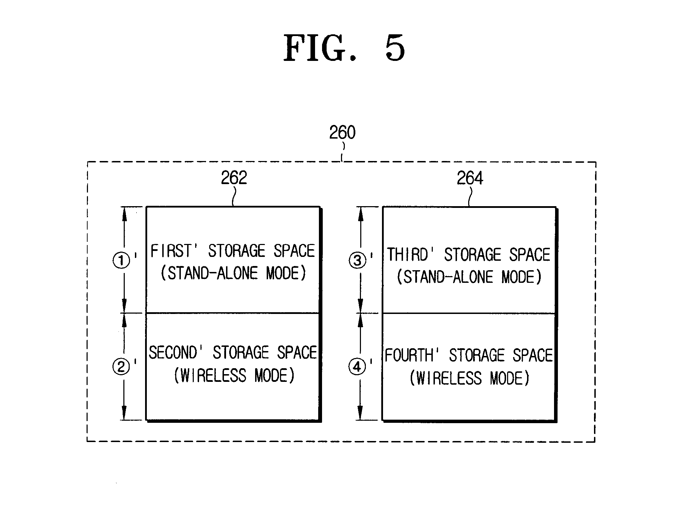

Figure 4 depicts the first storage part 180 of Figure 1. In Figure 4, the first storage part 180 includes a first storage medium 182 and a second storage medium 184. The first storage medium 182 stores the first information, and is split into a first storage space (1) and a second storage space (2). The first storage space (1) stores the ID information of channels tuned according to the request of the remote controller 110a in the stand-alone mode. The remote controller 110a requests the channel tuning to view a certain broadcast or to perform the auto program function. The second storage space (2) stores the ID information of the tuned channels according to the request of the reception device 200. An example of the auto program function may include an automatic channel search function.

The second storage medium 184 stores the second information, and is split into a third storage space (3) and a fourth storage space (4).

The third storage space (3) stores additional information of each channel stored in the first storage space (1) in the stand-alone mode. The fourth storage space (4) stores additional information of each channel stored in the second storage space (2) in the wireless mode.

The first controller 190 controls overall operation of the transmission device 100. For example, when the transmission device 100 is in the wireless mode, the first controller 190 controls the encoder 140 to generate the digital content by encoding the signal of the channel turned by the turner 120, and controls the first wireless communication part 170 to send the generated digital content to the reception device 200.

When the transmission device 100 is in the stand-alone mode, the first controller 190, upon receiving a certain control signal from the remote controller 110a, performs a function corresponding to the received control signal. In particular, the first controller 190 controls the first storage space (1) and the third storage space (3) to store the first information that is set and modified according to the performed function.

Specifically, when the transmission device 100 is set to the stand-alone mode, if the automatic channel search function is requested from the remote controller 110a, the first controller 190 controls the turner 120 to tune to channels carrying broadcast signals sequentially. The first controller 190 controls the first storage space (1) and the third storage space (3) to store the first information of each channel automatically tuned by the tuner 120, that is, to respectively store the ID information and the additional information of each channel.

When the transmission device 100 is set to the stand-alone mode, if a change of the current channel is requested from the remote control 110a, the first controller 190 controls the tuner 120 to tune to that channel . The first controller 190 controls the first storage space (1) and the third storage space (3) to store the first information of the tuned channel, that is, to respectively store the ID information and the additional information of the certain channel.

When the receiver 110 receives the display request signal of the mode selection view from the remote controller 110a, the first controller 190 controls the first view generator 150a to generate the mode selection view. The first controller 190 controls the external interface part 160 to send the generated mode selection view to the display device 100a. Thus, the mode selection view as shown in Figure 3 is displayed on the display device 100a. The receiver 110 receives the signal from the remote controller 110a only when the transmission device 100 is set to the stand-alone mode.

After the mode selection view is displayed, if the receiver 110 receives a selection signal for the stand-alone mode from the remote controller 110a, the first controller 190 controls the first wireless communication part 170 to maintain the off state of the wireless connection.

After the mode selection view is displayed, if the receiver 110 receives a selection signal for the wireless mode from the remote controller 110a, the first controller 190 controls the first wireless communication part 170 to turn on the wireless connection.

If the wireless connection is on, the first controller 190 determines switching to the wireless mode, and controls the first storage part 180 to copy the ID information of each channel stored in the first storage space (1) to the second storage space (2) and to copy the additional information of each channel stored in the third storage space (3) to the fourth storage space (4).

When the copying is completed, the first controller 190 controls the first wireless communication part 170 to send the first and second information stored in the second storage space (2) and the fourth storage space (4) to the reception device 200.

Referring back to Figure 2, the reception device 200 includes a user input part 210, a display part 220, a second wireless communication part 230, a decoder 240, a second view generator 250, a second storage part 260, and a second controller 270.

The user input part 210 is a user interface operable to send to the second controller 270 a signal to request a function supported by the reception device 200. To this end, the user input part 210 is provided with a plurality of operation keys such as number keys, direction keys, and an OK key.

The user input part 210 outputs the display request signal to request the display of the mode selection view described above. When the mode selection view is displayed on the display part 220, the user input part 210 outputs a selection signal for one of the stand-alone mode and the wireless mode.

The display part 220 may employ a cathode ray tube (CRT), a liquid crystal display (LCD), or a plasma display panel (PDP) for displaying the mode selection view of Figure 3 or the broadcast program of the channel tuned by the transmission device 100.

The second wireless communication part 230 receives the digital content from the transmission device 100 and provides the received digital content to the decoder 240. The second wireless communication part 230 receives the first and second information from the transmission device 100 and provides the received information to the second storage part 260. The second wireless communication part 230 conforms to a wireless network standard such as IEEE 802.11a.

The decoder 240 decodes the digital content provided from the second wireless communication part 230 so that the reception device 200 acquires desired content. The decoding algorithm of the decoder 240 corresponds to the encoding algorithm (for example, MPEG) of the encoder 140 of the transmission device 100.

Upon receiving the display request signal from the user input part 210, the second view generator 250 generates and outputs the mode selection view to the display part 220. Hence, the mode selection view is displayed on the display part 220 as shown in Figure 3.

The second storage part 260 stores the first and second information received from the transmission device 100. To this end, the second storage part 260 has the same construction as the first storage part 170.

Figure 5 depicts the second storage part 260 of Figure 1. Referring to Figure 5, the second storage part 260 includes a third storage medium 262 and a fourth storage medium 264.

The third storage medium 262 is split into a first' storage space (1)' storing the ID information of the channels among the first information received from the transmission device 100, and a second' storage space (2)' storing the ID information of the channels among the second information received from the transmission device 100.

The fourth storage medium 264 is split into a third' storage space (3)' storing the additional information of the channels among the first information received from the transmission device 100, and a fourth' storage space (4)' storing the additional information of the channels among the second information received from the transmission device 100.

When the current tuned channel is changed according to the request of the user input part 210, some of the ID information and the additional information of the channels stored in the third' storage space (3)' and the fourth' storage space (4)' is changed. Due to this change, the information stored in the third' storage space (3)' and the fourth' storage space (4)' is transmitted to the transmission device 100 wirelessly, and stored in the third storage space (3) and the fourth storage space (4). When the first and second information elements received from the transmission device 100 are stored in the second storage part 260, the same information elements are stored in both the first storage part 180 and the second storage part 260.

The second controller 270 controls overall operations of the reception device 200. For instance, the second controller 270 controls the decoder 240 to decode the digital content incoming from the second wireless communication part 230, and controls the second storage part 260 to store the first and second information incoming from the second wireless communication part 230.

Upon receiving the display request signal from the user input part 210, the second controller 270 controls the second view generator 250 and the display part 220 to generate and display the mode selection view.

If the selection signal for the stand-alone mode is received from the user input part 210 after the mode selection view is displayed, the second controller 270 controls the second wireless communication part 230 to turn off the wireless connection.

If the selection signal for the wireless mode is received from the user input part 210, the second controller 270 controls the second wireless communication part 230 to maintain the on state of the wireless connection or to change from the stand-alone mode to the wireless mode as appropriate.

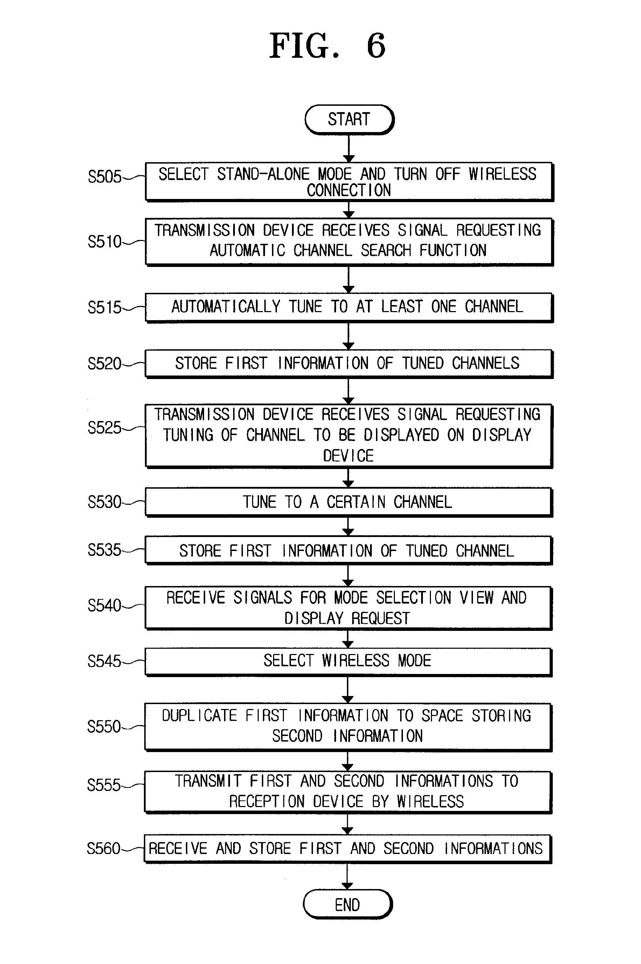

Figure 6 illustrates a method implemented by the wireless communication system of Figure 1.

Referring now to Figures 1 to 6, the transmission device 100 is set to the stand-alone mode (S505). The stand-alone mode is selected by the user input part 210 of the reception device 200, and is set by turning off the wireless connection.

If the receiver 110 receives the signal requesting the automatic channel search function from the remote controller 110a (S510), the first controller 190 controls the tuner 120 to automatically tune to at least one channel (S515).

The first controller 190 controls the first storage part 180 to store the first information of the tuned channels at S515 (S520). In further detail, the first controller 190 controls storing of the ID information of the channels among the first information in the first storage space (1) of the first storage part 180, and the additional information of the channels among the first information in the third storage space (3) of the first storage part 180.

When the receiver 110 receives the signal requesting the tuning of a certain channel to be displayed on the display device 100a from the remote controller 110a (S525), the first controller 190 controls the tuner 120 to tune to the certain channel (S530).

The first controller 190 controls the first storage part 180 to store the first information of the tuned channel at S530 (S535).

After a time, when the signals requesting the display of the mode selection view and for selecting the wireless mode are received from the remote controller 110a (S540), the first controller 190 turns on the wireless connection (S545).

The first controller 190 controls the first storage part 180 to duplicate the ID information in the first storage space (1) to the second storage space (2), and to duplicate the additional information in the third storage space (3) to the fourth storage space (4) (S550).

Next, the first controller 190 controls the first wireless communication part 170 to transmit the first and second information stored in the second storage space (2) and the fourth storage space (4) to the reception device 200 (S555).

When the second wireless communication part 230 of the reception device 200 receives the first and second information, the second controller 270 controls the second storage part 260 to store the received first and second information (S560). Specifically, the second controller 270 controls the second storage part 260 to store the channel information of the first information in the first' storage space (1)', the additional information of the first information in the third' storage space (3)', the channel information of the second information in the second' storage space (2)', and the additional information of the second information in the fourth' storage space (4)'.

As a result, the first and second information, which is stored in the transmission device 100 in the stand-alone mode, is transmitted to and stored in the reception device 200 in the wireless mode.

The remote controller 110a may include an additional key for outputting a selection signal for one of the stand-alone mode and the wireless mode without needing the mode selection view to be displayed.

The transmission device 100 receiving the signal from the remote controller 110a only in the stand-alone mode is not limiting on the scope of the invention. The transmission device 100 can be constructed to receive signals from the remote controller 110a even in the wireless mode.

The first storage medium 182 and the third storage medium 262 can be an EEPROM (electrically erasable and programmable read only memory). The second storage medium 184 and the fourth storage medium 264 can be a flash memory.

The first storage part 180 and the second storage part 260 respectively include two memories as shown in Figures 4 and 5, but the invention is not limited to this. Alternatively, it is possible to split a single storage medium into at least four spaces for storing the channel information and the ID information of the first information and those of the second information, respectively.

Both the transmission device 100 and the reception device 200 can select on and off states of the wireless connection as explained above.

In light of the foregoing, the transmission device 100 is capable of performing the functions of the set-top box when the wireless connection between the transmission device 100 and the reception device 200 is off. This is achieved by performing a function such as channel tuning after storing the information set when the wireless connection is off in a different space from the information set when the wireless connection is on. The broadcast program of the tuned channel is displayed on the display device 100a connected to the transmission device 100 by wire. When the wireless connection is turned on, the information stored in the transmission device 100 is sent to the reception device 200. Therefore, the reception device 200 stores the same information as the transmission device 100.

If the wireless connection is turned on after completing the automatic channel search function, the information relating to the searched channels is transmitted to the reception device 200. As a result, the automatic channel search function is performed more rapidly.

Variations of and modifications to the embodiments will occur to those skilled in the art. All such variations and modifications fall within the scope of the invention, which is defined only by the appended claims.

## Claims

1. A method of operating a transmission device (100) connectable wirelessly to a reception device (200), the method being **characterised by**:
when a wireless connection between the transmission device (100) and the reception device (200) is disconnected, at the transmission device:
receiving a user-instigated control signal requesting a function;
performing a function corresponding to the received control signal, the step of performing the function resulting in a first set of information being obtained;
storing the first set of information separately from information obtained in circumstances other than a function being performed at the transmission device when the wireless connection is disconnected.

2. A method as claimed in claim 1, comprising, when the wireless connection becomes connected, transmitting the first set of information to the receiving device for storage therein.

3. A method as claimed in claim 1 or claim 2, comprising, when the wireless connection becomes connected, transmitting information obtained by the receiving device to transmission device for storage therein.

4. A method as claimed in any preceding claim, wherein the step of performing the function comprises tuning to a signal, and the first information set includes information about the tuned-to signal.

5. . A method as claimed in claim 4, further comprising:
deriving a displayable signal from the tuned-to signal, and
transmitting the displayable signal to a display device connected to the transmission device by a wired connection.

6. A method as claimed in any preceding claim, wherein the transmission device is responsive to the control signal only when the wireless connection is disconnected.

7. A transmission device (100) connectable wirelessly to a reception device (200), the transmission device being **characterised by** being operable when a wireless connection between the transmission device (100) and the reception device (200) is disconnected:
to receive a user-instigated control signal requesting a function;
to perform a function corresponding to the received control signal, resulting in a first set of information being obtained; and
to store the first set of information separately from information obtained in circumstances other than a function being performed at the transmission device when the wireless connection is disconnected.

8. A wireless communication system comprising:
a transmission device; and
a reception device,
the transmission device comprising,
a wireless communication part wirelessly connected to the reception device,
a storage part configured to store a first information set when the wireless connection is off and a second information set when the wireless connection is on, a receiver configured to receive a control signal requesting a certain function output from a user interface, when the wireless connection is off, and
a controller configured to perform a function corresponding to the received control signal if the control signal is received from the user interface when the wireless connection is off, and to control the storage part to store the first information that is set according to the performed function.

9. The wireless communication system of claim 8, wherein the transmission device further comprises a tuner configured to tune to a certain channel, and the controller controls the storage part to store the first information set which includes an identification (ID) information of at least one channel automatically tuned by the tuner and an additional information of the at least one channel if an automatic channel search function is executed according to a request of the user interface when the wireless connection is off.

10. The wireless communication system of claim 8, wherein the transmission device further comprises:
a tuner for tuning to a certain channel; and
an external interface part connected to a display device by wire, and
the controller, if the certain channel is tuned according to a request of the user interface when the wireless connection is off, controls the storage part to store the first information which includes the ID information of the tuned channel and an additional information of the tuned channel, and the controller controls the external interface part to transmit a broadcast signal of the tuned channel to the display device.

11. The wireless communication system of claim 1, wherein the first and second information comprise an ID information of at least one channel and an additional information of the at least one channel.

12. The wireless communication system of claim 11, wherein the storage part comprises:
a first storage having a first space storing the ID information of the first information and a second space storing the ID information of the second information; and
a second storage having a third space storing the additional information of the first information and a fourth space storing the additional information of the second information.

13. The wireless communication system of claim 12, wherein the controller processes to duplicate the ID information stored in the first space to the second space, and the additional information stored in the third space to the fourth space when the wireless connection is on, and the controller controls the wireless communication part to transmit the first information and the second information stored in the second space and the fourth space to the reception device.

14. The wireless communication system of claim 12, wherein the first storage is an electrically erasable and programmable read only memory (EEPROM), and the second storage is a flash memory.

15. The wireless communication system of claim 1, wherein the user interface outputs a selection signal with respect to one of a first mode in which the wireless connection is off and a second mode in which the wireless connection is on, and the controller controls the wireless communication part to turn off the wireless connection when the receiver receives a selection signal for the first mode, and the controller controls the wireless communication part to turn on the wireless connection when the receiver receives a selection signal for the second mode.

16. The wireless communication system of claim 15, wherein at least one of the transmission device and the reception device comprises a view generator for generating a mode selection view for selecting one of the first mode and the second mode.

17. The wireless communication system of claim 8, wherein the receiver receives a signal formed of infrared rays emitted from the user interface.

18. A wireless communication method for a transmission device and a reception device which are connected for wireless communication with each other, the wireless communication method comprising:
turning off a wireless connection between the transmission device and the reception device;
receiving a control signal requesting a certain function output from a user interface; performing a function corresponding to the received control signal; and
storing a first information that is set according to the performed function when the wireless connection is off, in a different space from a second information set when the wireless connection is on.

19. The wireless communication method of claim 18, further comprising automatically tuning to at least one channel by a tuner when a control signal requesting an automatic channel search function is received in the receiving step,
wherein the storing step stores the first information which includes an identification (ID) information of at least one channel automatically tuned by the tuner and an additional information of the at least one channel.

20. The wireless communication method of claim 18, further comprising:
connecting with a display device by a wire when the wireless connection is off;
tuning to a certain channel displayed on the display device; and
processing a broadcast signal of the tuned channel into a displayable signal and
transmitting the displayable signal to the display device,
wherein the storing step stores the first information which includes an ID information of the tuned channel and an additional information of the tuned channel.

21. The wireless communication method of claim 18, wherein the first and second information include an ID information of at least one channel and an additional information of the at least one channel.

22. The wireless communication method of claim 21, wherein the storing step stores an ID information of the first information in a first storage space, an ID information of the second information in a second storage space, an additional information of the first information in a third storage space, and an additional information of the second information in a fourth storage space.

23. The wireless communication method of claim 22, further comprising, after the storing:
duplicating the ID information stored in the first storage space to the second storage space, and the additional information stored in the third storage space to the fourth storage space when the wireless connection is on; and
transmitting the first information and the second information stored in the second storage space and the fourth storage space to the reception device.

24. The wireless communication method of claim 18, further comprising, before the turning-off:
receiving from the user interface a selection signal for one of a first mode in which the wireless connection is turned off and a second mode in which the wireless connection is turned on; and
turning off the wireless connection when a selection signal for the first mode is received, and turning on the wireless connection when a selection signal for the second mode is received.

25. The wireless communication method of claim 24, further comprising generating a mode selection view for selecting one of the first mode and the second mode.

26. The wireless communication method of claim 18, wherein the receiving receives a signal formed of infrared rays emitted from the user interface.

27. The wireless communication method of claim 18, wherein the receiving receives the control signal from the user interface only when the wireless connection is off.
